# FASCICULE DE BREVET EUROPEEN

(11) **EP 2 268 989 B1**
(45) Date de publication et mention de la délivrance du brevet: **02.05.2018**
(21) Numéro de dépôt: 09754073.6
(22) Date de dépôt: 20.03.2009
(51) Int. Cl.: F25J 3/02

(54) **PROCÉDÉ ET APPAREIL DE SÉPARATION CRYOGÉNIQUE D'UN MÉLANGE D'HYDROGÈNE ET DE MONOXYDE DE CARBONE**
VERFAHREN UND VORRICHTUNG ZUR KRYOGENEN TRENNUNG EINER MISCHUNG AUS WASSERSTOFF UND KOHLENMONOXID
METHOD AND DEVICE FOR CRYOGENICALLY SEPARATING A MIXTURE OF HYDROGEN AND CARBON MONOXIDE

(30) Priorité: 18.04.2008 FR 0852649
(43) Date de publication de la demande: 05.01.2011
(73) Titulaire: L'Air Liquide Société Anonyme pour l'Etude et l'Exploitation des Procédés Georges Claude, 75007 Paris (FR)
(72) Inventeur: COURT, Philippe, F-94300 Vincennes (FR); HERNANDEZ, Antoine, 92290 Chatenay Malabry (FR)
(74) Mandataire: Mercey, Fiona Susan
(86) Numéro de dépôt international: PCT/FR2009/050484
(87) Numéro de publication internationale: WO 2009/144423

(56) Documents cités:
- EP-A- 1 729 077
- FR-A- 2 911 390
- JP-A- 63 163 771
- US-A- 4 478 621
- US-A- 4 566 886
- BERNINGER R: "FORTSCHRITTE BEI DER H2/CO-TIEFTEMPERATURZERLEGUNG//PROGRESS IN H2/CO LOW TEMPERATURE SEPARATION" BERICHTE AUS TECHNIK UND WISSENSCHAFT, LINDE AG. WIESBADEN, DE, vol. 62, 1 janvier 1988 (1988-01-01), pages 18-32, XP009045782 ISSN: 0942-332X

## Description

La présente invention concerne un procédé et un appareil de séparation cryogénique d'un mélange d'hydrogène et de monoxyde de carbone, en particulier d'un mélange dont les composants principaux comprennent l'hydrogène et le monoxyde de carbone, conformément aux préambules des revendications 1 et 7 respectivement et connus du document EP-A-1 729 077. Les unités de production de monoxyde de carbone et d'hydrogène peuvent être séparées en deux parties :
- ***génération du gaz de synthèse*** (mélange contenant H₂, CO, CH₄, CO₂, Ar et N₂ essentiellement). Parmi les diverses voies industrielles de production de gaz de synthèse, celle à base gazéification de charbon semble se développer de plus en plus notamment dans les pays riches en dépôts de charbon comme la chine. La conception de cette unité qui comprend un réacteur de gazéification du charbon avec de l'oxygène et de la vapeur d'eau, est basée sur les productions en CO et hydrogène requises.
- ***purification du gaz de synthèse.*** On retrouve :
- une unité de lavage à un solvant liquide pour éliminer la plus grande partie des gaz acides contenus dans le gaz de synthèse
- une unité d'épuration sur lit d'adsorbants.
- une unité de séparation par voie cryogénique dite boite froide pour la production de CO.

Généralement le gaz de synthèse comprend un mélange à haute pression (généralement entre 30 et 60 bar) et est très riche en CO (environ 50% mol.). Un autre avantage du procédé de gazéification au charbon est la faible teneur en impuretés (CH₄, Argon et Azote) présents dans le gaz de synthèse à l'entrée de la boîte froide pour la production de CO pur.

Ceci permet d'envisager un schéma procédé pour la boite froide relativement simplifié, la séparation cryogénique se limitant à une séparation entre le CO et l'hydrogène. Les teneurs en inertes dans le gaz de synthèse sont compatibles avec la pureté de CO requise par le client dans la plupart des cas.

Ce schéma ne comprend pas de cycle dédié à la séparation.

L'hydrogène séparé du CO est requis à haute pression pour pouvoir le valoriser, soit dans un PSA, soit dans une unité de synthèse de méthanol ou autre

Une partie de l'énergie de séparation de la dite boite froide est assurée par détente libre entre le gaz de synthèse et le CO pur produit à basse pression, mais dans la plupart des cas, cette détente libre n'est pas suffisante pour boucler le bilan frigorifique de l'unité. Un apport d'azote liquide est nécessaire pour le maintien en froid de la boite froide et boucler le bilan frigorifique.

Le gaz de synthèse à une pression généralement comprise entre 30 et 60 bar venant d'une unité de prétraitement (séparation CO2 et MeOH) est refroidi dans la ligne d'échange principale et partiellement condensé avant d'alimenter un pot séparateur de condensation partielle à une étape. La vapeur riche en hydrogène est envoyée dans la plupart des cas dans une unité de MeOH ou vers un PSA après réchauffement dans la ligne d'échange. Le liquide de cuve est envoyé vers une colonne d'épuisement à moyenne pression (autour de 14 bar) après détente. La vapeur de tête appelée gaz de flash sort de la boîte froide après réchauffement et est envoyée comme fuel ou recycle dans le système via un compresseur.

Un circuit soutiré à un niveau supérieur du fond de cuve de la colonne est sous-refroidi à un certain niveau de température , détendu , envoyé vers un pot thermosiphon puis vaporisé dans la ligne d'échange avant d'être envoyé à l'aspiration du compresseur de CO.

Le liquide de cuve de la colonne d'épuisement est sous-refroidi dans la ligne d'échange à un niveau de température moins froid que le circuit évoqué précédemment avant d'être détendu, vaporisé et réchauffé dans la ligne d'échange principale et finalement envoyé à un étage intermédiaire du compresseur de CO.

Un troisième circuit peut etre soutiré à un autre niveau de la colonne (un niveau supérieur au fond de cuve), sous-refroidi à un niveau de température différent des deux précédents, détendu, vaporisé et réchauffé dans la ligne d'échange

Le compresseur de CO permet de comprimer le produit CO (qui est la somme de tous les soutirages liquide de la colonne d'épuisement) à la pression requise par l'unité aval (acide acétique ou autre).

L'intérêt d'effectuer le sous-refroidissement des débits de monoxyde de carbone à des niveaux de température différents est de réduire les KS et la charge thermique, donc l'investissement de la ligne d'échange principale. On sous-refroidit le ou les débit(s) moyenne(s) pressions à un (des) niveau(x) de température moins froid(s) que s'ils étaient tous mélangés.

Ceci permet de réduire l'énergie électrique du compresseur de CO 33, 35, 37. On consomme moins d'énergie pour le sous-refroidissement des niveaux moyenne pression. On ne sous-refroidit chacun des débits riche en CO qu'à un certain niveau de température évitant de créer du gaz après détente, ce qui permet d'éviter à avoir à installer des pots d'introduction diphasique (liquide-gaz) pour la ligne d'échange principale.

Ceci permet d'avoir un fluide riche en monoxyde de carbone basse pression (niveau de pression le plus bas au pot de thermosiphon 27) qui peut contenir plus d'hydrogène que le fond de cuve de la colonne d'épuisement et donc permet d'avoir une température de vaporisation plus basse pour un niveau de pression identique et donc permet de plus refroidir le gaz de synthèse (pour un delta T identique) et d'améliorer le rendement de CO de l'unité. Sinon, à rendement identique, ceci permet de réduire l'énergie électrique du compresseur car on peut augmenter la pression d'aspiration du compresseur.

Selon un objet de l'invention, il est prévu un procédé selon la revendication 1.

Optionnellement :
- les premier et deuxième débits ont des puretés différentes ;
- les premier et deuxième débits ont la même pureté ;
- au moins un des débits est soutiré en cuve de la colonne d'épuisement ;
- le premier débit est un débit soutiré en cuve de colonne d'épuisement qui se refroidit à une première température dans la ligne d'échange, est détendu puis se réchauffe dans la ligne d'échange et le deuxième débit est soutiré à un niveau intermédiaire de la colonne d'épuisement, se refroidit à une deuxième température inférieure à la première température, est détendu puis se réchauffe dans la ligne d'échange ;
- le deuxième débit, refroidi à la deuxième température est envoyé au pot séparateur ;
- un troisième débit est soutiré à un niveau intermédiaire de la colonne d'épuisement supérieur ou inférieur à celui du deuxième débit, se refroidit à une troisième température inférieure ou supérieure à la première température et/ou inférieure ou supérieure à la deuxième température, est détendu puis se réchauffe dans la ligne d'échange

Selon un autre objet de l'invention, il est prévu un appareil de séparation cryogénique d'un mélange d'hydrogène et de monoxyde de carbone selon la revendication 7. Optionnellement l'appareil comprend :
- des moyens pour soutirer les au moins premier et deuxième débits au même niveau de la colonne d'épuisement ;
- des moyens pour soutirer les au moins premier et deuxième débits à des niveaux séparés d'au moins un plateau théorique de la colonne d'épuisement ;
- des moyens pour soutirer au moins le premier débit en cuve de la colonne d'épuisement ;
- des moyens pour soutirer le premier débit en cuve de la colonne d'épuisement et/ou des moyens pour soutirer un deuxième débit à un premier niveau intermédiaire de la colonne d'épuisement ;
- des moyens pour soutirer un troisième débit à un niveau inférieur ou supérieur au premier niveau intermédiaire de la colonne d'épuisement ;
- des moyens pour envoyer le deuxième débit refroidi dans la ligne d'échange ou le premier débit refroidi dans la ligne d'échange à un pot séparateur.

L'invention sera décrite en plus de détail en se référant aux figures qui sont des schémas de procédés selon l'invention.

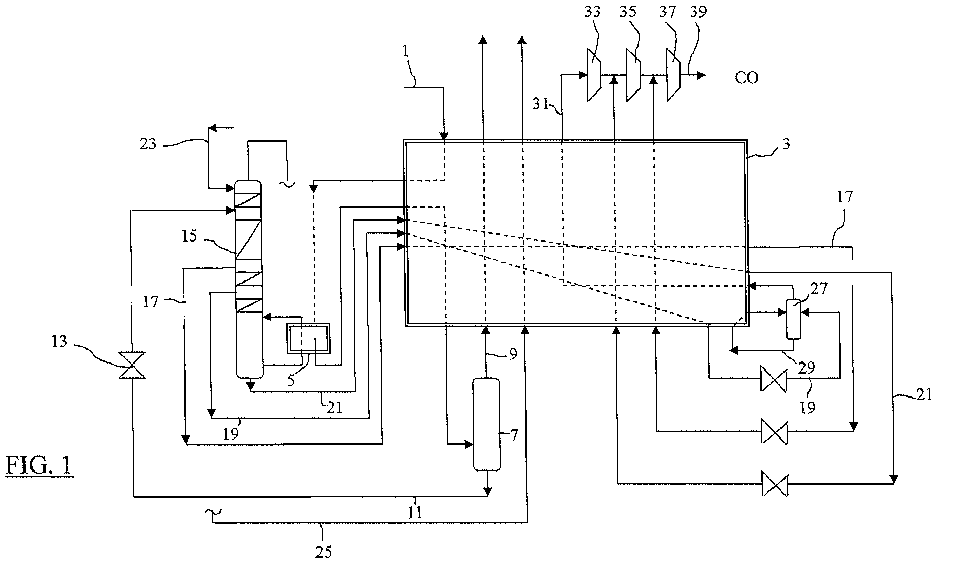

Dans la Figure 1, un débit de gaz de synthèse 1 à une pression comprise généralement entre 30 et 60 bars contient de l'hydrogène et du monoxyde de carbone et éventuellement de faibles quantités de méthane, d'argon et d'azote. Il se refroidit jusqu'à un niveau intermédiaire de la ligne d'échange 3, est soutiré et sert à rebouillir la cuve de la colonne 15 au moyen d'un échangeur 5. Ensuite le gaz de synthèse poursuit son refroidissement dans la ligne d'échange 3 et est envoyé à un pot séparateur 7 où il se condense partiellement. La vapeur de tête 9 est réchauffée dans la ligne d'échange pour former un débit riche en hydrogène. Le liquide de cuve 11 est détendu à 14 bar dans une vanne 13 et envoyé en tête de la colonne d'épuisement 15, également alimentée en tête par de l'azote liquide de biberonnage. Un soutirage liquide 19 à un niveau intermédiaire de la colonne d'épuisement 15 est sous-refroidi dans la ligne d'échange 3 avant d'être détendu, envoyé vers un pot thermosiphon 27. Le liquide de cuve 29 du pot 27 est vaporisé dans la ligne d'échange 3 avec un fonctionnement en thermosiphon et le gaz de tête 31 est envoyé à l'aspiration du premier étage 33 du compresseur de CO.

Le liquide de cuve 21 de la colonne d'épuisement 15 est sous-refroidi dans la ligne d'échange 3 à un niveau de température moins froid que le soutirage précédemment énoncé, détendu puis vaporisé dans la ligne d'échange 3 pour alimenter le compresseur à un étage intermédiaire 35 du compresseur de CO.

Un troisième débit 17 est soutiré à un niveau intermédiaire de la colonne, différent du débit 19 (peut-être soutiré à un niveau supérieur ou inférieur au débit 19), et sous-refroidi à un niveau de température moinsfroid que le débit 19. Ensuite ce débit est détendu puis vaporisé dans la ligne d'échange 3 pour alimenter le compresseur à un étage 37 du compresseur de CO.

Les trois débits 17, 19, 21 sont détendus à des pressions différentes avant d'être vaporisés.

Les trois débits mélangés 17, 19, 21 après vaporisation et réchauffement forment le monoxyde de carbone produit 39.

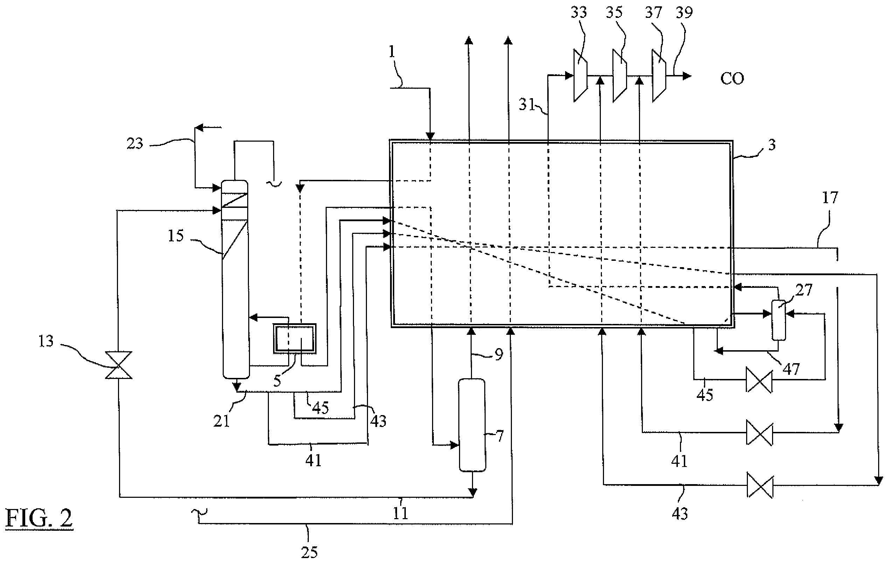

Dans la Figure 2, un débit de gaz de synthèse 1 à une pression comprise généralement entre 30 et 60 bar contient de l'hydrogène et du monoxyde de carbone et éventuellement de faibles quantités de méthane, d'argon et d'azote. Il se refroidit jusqu'à un niveau intermédiaire de la ligne d'échange 3, est soutiré et sert à rebouillir la cuve de la colonne 15 au moyen d'un échangeur 5. Ensuite le gaz de synthèse poursuit son refroidissement dans la ligne d'échange 3 et est envoyé à un pot séparateur 7 où il se condense partiellement. La vapeur de tête 9 est réchauffée dans la ligne d'échange pour former un débit riche en hydrogène. Le liquide de cuve 11 est détendu à une pression autour de 14 bar dans une vanne 13 et envoyé en tête de la colonne d'épuisement 15, également alimentée en tête par de l'azote liquide de biberonnage. Le liquide de cuve 21 de la colonne d'épuisement 15 est divisé en trois fractions 41, 43, 45, qui sont chacune sous-refroidie à une température différente dans la ligne d'échange 3 avant d'être détendue. Le premier débit 45 est envoyé vers un pot de thermosiphon 27. Le liquide de cuve 47 du pot 27 est vaporisé dans la ligne d'échange 3 avec un fonctionnement en thermosiphon et le gaz de tête 31 est envoyé à l'aspiration du premier étage 33 du compresseur de CO.

Les autres débits 41, 43 sont détendus à des pressions différentes puis se vaporisent dans la ligne d'échange 3 pour alimenter le compresseur à des étages intermédiaires 35 et 37 du compresseur de CO

Les trois débits 41, 43, 45 sont détendus à des pressions différentes avant d'être vaporisés.

Les trois débits mélangés 41, 43, 45 forment le monoxyde de carbone produit 39.

## Revendications

1. Procédé de séparation cryogénique d'un mélange d'hydrogène et de monoxyde de carbone comprenant éventuellement de faibles teneurs en méthane, argon et azote pour la production de CO pur par condensation partielle en une étape dans lequel le mélange est refroidi dans une ligne d'échange (3), partiellement condensé et au moins une partie du liquide résultant de la condensation partielle est envoyée en tête d'une colonne d'épuisement (15), au moins un premier et un deuxième débits riches en monoxydes de carbone (17, 19, 21) sont soutirés de la colonne d'épuisement sous forme liquide et envoyés dans la ligne d'échange où il se refroidissent, un des premier et deuxième débits (19, 45) est envoyé à un pot séparateur (27) après détente, le gaz du pot séparateur est réchauffé dans la ligne d'échange et envoyé au premier étage (33) d'un compresseur de monoxyde de carbone comprenant au moins deux étages (33, 35, 37), l'autre (17, 21, 41, 43) des premier et deuxième débits est détendu puis se réchauffe dans la ligne d'échange et est envoyé à un étage du compresseur en aval du premier étage, le gaz du pot séparateur et l'autre des premier et deuxième débits se réchauffant dans la ligne d'échange à des pressions différentes, la détente des premier et deuxième débits servant à fournir au moins une partie de l'énergie de séparation de la boîte froide, **caractérisé en ce que** le premier et le deuxième débits sont refroidis dans la ligne d'échange à des températures différentes.

2. Procédé selon la revendication 1 dans lequel les premier et deuxième débits (17, 19, 21) ont des puretés différentes.

3. Procédé selon la revendication 1 dans lequel les premier et deuxième débits (41, 43, 45) ont la même pureté.

4. Procédé selon l'une des revendications précédentes dans lequel au moins un des débits (21) est soutiré en cuve de la colonne d'épuisement.

5. Procédé selon la revendication 4 dans lequel le premier débit (21) est un débit soutiré en cuve de colonne d'épuisement qui se refroidit à une première température dans la ligne d'échange (3), est détendu puis se réchauffe dans la ligne d'échange et le deuxième débit (19) est soutiré à un niveau intermédiaire de la colonne d'épuisement, se refroidit à une deuxième température inférieure à la première température, est détendu puis se réchauffe dans la ligne d'échange

6. Procédé selon la revendication 5 dans lequel le deuxième débit, refroidi à la deuxième température est envoyé au pot séparateur (27).

7. Appareil de séparation cryogénique d'un mélange d'hydrogène et de monoxyde de carbone comprenant éventuellement de faibles teneurs en méthane, argon et azote pour la production de CO pur par condensation partielle en une étape comprenant une ligne d'échange (3), une colonne d'épuisement (15), un premier et un deuxième pot séparateur (7, 27), un compresseur de monoxyde de carbone (33, 35, 37) comprenant au moins deux étages, des moyens pour envoyer le mélange à refroidir dans la ligne d'échange, des moyens pour envoyer le mélange refroidi au premier pot séparateur, des moyens pour soutirer au moins une partie du liquide résultant de la condensation partielle du premier pot, des moyens pour envoyer ce liquide en tête de la colonne d'épuisement, des moyens pour soutirer au moins un premier et un deuxième débits riches en monoxydes de carbone sous forme liquide de la colonne d'épuisement, des moyens pour refroidir le premier et le deuxième débits à une première et une deuxième température respectivement dans la ligne d'échange, des moyens pour envoyer le premier débit à la première température ou le deuxième débit à la deuxième température au deuxième pot séparateur après détente, des moyens pour réchauffer le gaz du pot séparateur dans la ligne d'échange et des moyens pour envoyer le gaz réchauffé au premier étage du compresseur de monoxyde de carbone, des moyens pour détendre et pour réchauffer le deuxième débit ou le premier débit dans la ligne d'échange et des moyens pour envoyer le deuxième débit ou le premier débit réchauffé à un étage du compresseur en aval du premier étage, **caractérisé en ce que** la première et la deuxième températures sont différentes.

8. Appareil selon la revendication 7 comprenant des moyens pour soutirer les au moins premier et deuxième débits (41, 43, 45) au même niveau de la colonne d'épuisement.

9. Appareil selon la revendication 7 comprenant des moyens pour soutirer les au moins premier et deuxième débits (17, 19, 21) à des niveaux séparés d'au moins un plateau théorique de la colonne d'épuisement.

10. Appareil selon la revendication 7, 8 ou 9 comprenant des moyens pour soutirer au moins le premier débit (21) en cuve de la colonne d'épuisement.

## Patentansprüche

1. Verfahren zur kryogenen Trennung einer Mischung aus Wasserstoff und Kohlenmonoxid, umfassend eventuell geringe Gehalte an Methan, Argon und Stickstoff, für die Produktion von reinem CO durch teilweise Kondensation in einem Schritt, bei dem die Mischung in einer Tauscherleitung (3) abgekühlt wird, teilweise kondensiert und mindestens ein Teil der Flüssigkeit, die aus der teilweisen Kondensation resultiert, zum Kopf einer Abtriebssäule (15) geschickt wird, mindestens eine erste und eine zweite Fördermenge reich an Kohlenmonoxiden (17, 19, 21) von der Abtriebssäule in flüssiger Form abgezogen und in die Tauscherleitung geschickt werden, wo sie abkühlen, eine der ersten und zweiten Fördermenge (19, 45) nach dem Entspannen zu einem Separatortopf (27) geschickt wird, das Gas des Separatortopfs in der Tauscherleitung erwärmt und zur ersten Stufe (33) eines Kohlenmonoxidverdichters geschickt wird, der mindestens zwei Stufen (33, 35, 37) umfasst, die andere (17, 21, 41, 43) der ersten und zweiten Fördermenge entspannt wird, sich dann in der Tauscherleitung erwärmt und an eine Stufe des Verdichters stromabwärts zu der ersten Stufe geschickt wird, wobei sich das Gas des Separatortopfs und das andere der ersten und zweiten Fördermenge in der Tauscherleitung bei unterschiedlichen Drücken erwärmen, wobei die Entspannung der ersten und zweiten Fördermenge dazu dient, mindestens einen Teil der Separationsenergie des kalten Behälters bereitzustellen, **dadurch gekennzeichnet, dass** die erste und zweite Fördermenge in der Tauscherleitung auf unterschiedliche Temperaturen abgekühlt werden.

2. Verfahren nach Anspruch 1, wobei die erste und zweite Fördermenge (17, 19, 21) unterschiedliche Reinheiten haben.

3. Verfahren nach Anspruch 1, wobei die erste und zweite Fördermenge (41, 43, 45) dieselbe Reinheit haben.

4. Verfahren nach einem der vorangehenden Ansprüche, wobei mindestens eine der Fördermengen (21) in den Sumpf der Abtriebssäule abgezogen wird.

5. Verfahren nach Anspruch 4, wobei die erste Fördermenge (21) eine in den Sumpf der Abtriebssäule abgezogene Fördermenge ist, die auf eine erste Temperatur in der Tauscherleitung (3) abkühlt, entspannt wird, sich dann in der Tauscherleitung erwärmt, und die zweite Fördermenge (19) in einem Zwischenbereich der Abtriebssäule abgezogen wird, sich auf eine zweite Temperatur, die unter der ersten Temperatur ist, abkühlt, entspannt wird, sich dann in der Tauscherleitung erwärmt.

6. Verfahren nach Anspruch 5, wobei die zweite Fördermenge, abgekühlt auf die zweite Temperatur, an den Separatortopf (27) geschickt wird.

7. Vorrichtung zur kryogenen Trennung einer Mischung aus Wasserstoff und Kohlenmonoxid, umfassend eventuell geringe Gehalte an Methan, Argon und Stickstoff, für die Produktion von reinem CO durch teilweise Kondensation in einem Schritt, umfassend eine Tauscherleitung (3), eine Abtriebssäule (15), einen ersten und einen zweiten Separatortopf (7, 27), einen Kohlenmonoxidverdichter (33, 35, 37), umfassend mindestens zwei Stufen, Mittel zum Schicken der zu kühlenden Mischung in die Tauscherleitung, Mittel zum Schicken der gekühlten Mischung zum ersten Separatortopf, Mittel zum Abziehen mindestens eines Teils der Flüssigkeit, die aus der teilweisen Kondensation resultiert, aus dem ersten Topf, Mittel zum Schicken dieser Flüssigkeit an den Kopf der Abtriebssäule, Mittel, um mindestens eine erste und eine zweite Fördermenge reich an Kohlenmonoxiden in flüssiger Form aus der Abtriebssäule abzuziehen, Mittel, um die erste und die zweite Fördermenge auf eine jeweils erste und eine zweite Temperatur in der Tauscherleitung abzukühlen, Mittel, um die erste Fördermenge in der ersten Temperatur oder die zweite Fördermenge in der zweiten Temperatur an den zweiten Separatortopf nach dem Entspannen zu schicken, Mittel, um das Gas des Separatortopfs in der Tauscherleitung zu erwärmen und Mittel, um das erwärmte Gas an die erste Stufe des Kohlenmonoxidverdichters zu schicken, Mittel, um die zweite Fördermenge oder die erste Fördermenge in der Tauscherleitung zu entspannen und zu erwärmen und Mittel, um die zweite Fördermenge oder die erste Fördermenge erwärmt an eine Stufe des Verdichters stromabwärts nach der ersten Stufe zu schicken, **dadurch gekennzeichnet, dass** die erste und zweite Temperatur unterschiedlich sind.

8. Vorrichtung nach Anspruch 7, umfassend Mittel, um die mindestens erste und zweite Fördermenge (41, 43, 45) im selben Bereich der Abtriebssäule abzuziehen.

9. Vorrichtung nach Anspruch 7, umfassend Mittel, um die mindestens erste und zweite Fördermenge (17, 19, 21) in Bereichen, die von mindestens einem theoretischen Plateau der Abtriebssäule getrennt sind, abzuziehen.

10. Vorrichtung nach Anspruch 7, 8 oder 9, umfassend Mittel, um mindestens die erste Fördermenge (21) in den Sumpf der Abtriebssäule abzuziehen.

## Claims

1. A process for cryogenic separation of a mixture of hydrogen and carbon monoxide optionally comprising low concentrations of methane, argon and nitrogen for the production of pure CO by partial condensation in a step wherein the mixture is cooled in an exchange line (3), partially condensed and at least a portion of the liquid resulting from the partial condensation is sent to the top of a stripping column (15), at least a first and a second flow rich in carbon monoxide (17, 19, 21) are withdrawn from the stripping column in liquid form and sent to the exchange line where same are cooled, one of the first and second flows (19, 45) is sent to a separator pot (27) after holding, the gas of the separating tank is reheated in the exchange line and sent to the first stage (33) of a carbon monoxide compressor comprising at least two stages (33, 35, 37), the other (17, 21, 41, 43) of first and second flows is held then is heated in the exchange line and is sent to a stage of the compressor downstream of the first stage, the gas of the separator pot and the other of the first and second flows being heated in the exchange line at different pressures, holding of the first and second flows for providing at least part of the separation energy of the cold box, **characterized in that** the first and second flows are cooled in the exchange line at different temperatures.

2. A method of claim 1 wherein the first and second flows (17, 19, 21) have different purities.

3. A method of claim 1 wherein the first and second flows (41, 43, 45) have the same purity.

4. A method according to one of the preceding claims wherein at least one of the flows (21) is withdrawn from the tank of the stripping column.

5. A method of claim 4 wherein the first flow (21) is a flow withdrawn from the stripping column that is cooled to a first temperature in the exchange line (3) is held and then is heated in the exchange line and the second flow (19) is withdrawn at an intermediate level of the stripping column, is cooled to a second temperature below the first temperature, is held and then is heated in the heat exchange line.

6. A method of claim 5 wherein the second flow, cooled to the second temperature is supplied to the separator pot (27).

7. An apparatus for cryogenic separation of a mixture of hydrogen and carbon monoxide optionally comprising low concentrations of methane, argon and nitrogen for the production of pure CO by partial condensation in a step comprising an exchange line (3), a stripping column (15), a first and a second separator pot (7, 27), a carbon monoxide compressor (33, 35, 37) comprising at least two stages, means for sending the mixture to cool in the exchange line, means for sending the mixture cooled in first separator pot, means for withdrawing at least part of the liquid resulting from the partial condensation of the first pot, means for sending said liquid to the head of the stripping column, means for withdrawing at least a first and a second flow rich in carbon monoxide in liquid form from the stripping column, means for cooling the first and second flows to a first and a second temperature respectively in the exchange line, means for sending the first rate to the first temperature or the second rate to the second temperature in the second pot separator after holding, means for heating the gas of the separator pot in the exchange line and means for sending the heated gas to the first stage of the carbon monoxide compressor, means for holding and heating the second flow or the first flow in the exchange line and means for sending the second flow or the first flow heated to a stage of the compressor downstream of the first stage, **characterized in that** the first and second temperatures are different.

8. An apparatus according to claim 7 comprising means for withdrawing the at least first and second flows (41, 43, 45) at the same place of the stripping column.

9. An apparatus according to claim 7 comprising means for withdrawing the at least first and second flows (17, 19, 21) at separate places of at least one theoretical plate of the stripping column.

10. An apparatus of claim 7, 8 or 9 comprising means for withdrawing at least the first flow (21) from the tank of the stripping column.
